# FASCICULE DE BREVET EUROPEEN

(11) **EP 0 908 866 B1**
(45) Date de publication et mention de la délivrance du brevet: **20.07.2005**
(21) Numéro de dépôt: 98402411.7
(22) Date de dépôt: 01.10.1998
(51) Int. Cl.: G10K 11/16, B60J 1/00

(54) **Vitrage fixe de protection acoustique améliorée en contact avec un joint périphérique**
Verbesserte Schallschutzfestverglasung in Berührung mit einer Ränddichtung
Improved fixed glazing for acoustic protection in contact with a periferical seal

(30) Priorité: 06.10.1997 FR 9712407
(43) Date de publication de la demande: 14.04.1999
(73) Titulaire: SAINT-GOBAIN GLASS FRANCE, 92400 Courbevoie (FR)
(72) Inventeur: Garnier, Gilles, 60150 Thourotte (FR); Rehfeld, Marc, 95460 Ezanville (FR)
(74) Mandataire: Muller, René

(56) Documents cités:
- FR-A- 2 525 677
- SU-A- 1 175 739
- US-A- 4 614 676
- PATENT ABSTRACTS OF JAPAN vol. 097, no. 012, 25 décembre 1997 & JP 09 202269 A (MAZDA MOTOR CORP), 5 août 1997
- PATENT ABSTRACTS OF JAPAN vol. 097, no. 011, 28 novembre 1997 & JP 09 193651 A (NIPPON SHEET GLASS CO LTD;NIPPON ITA GLASS KANKYO AMENITY KK), 29 juillet 1997
- NAGHSHINEH ET AL.: "Material tailoring of structures to achieve a minimum radiation condition" JOURNAL OF THE ACOUSTICAL SOCIETY OF AMERICA., vol. 92, no. 2, août 1992, pages 841-855, XP000297954 NEW YORK US

## Description

L'invention concerne un vitrage fixe de protection acoustique améliorée pour véhicule et notamment pour véhicule automobile, en contact avec un joint périphérique.

On connaît par exemple du document FR 2 525 677 un vitrage coopérant avec un joint dans un habitacle de véhicule, le vitrage étant feuilleté avec une épaisseur réduite pour l'une des vitres et son feuilletage, afin que seule la tranche de l'autre vitre coopère avec le joint.

Parmi toutes les qualités concourant au confort dans les moyens de transport modernes comme les trains et les automobiles, le silence devient déterminant. En effet, les autres sources de désagrément d'origine mécanique, thermique, de visibilité, etc... ont été à peu près maîtrisées. Mais l'amélioration du confort acoustique présente de nouvelles difficultés. Les bruits d'origine aérodynamique, c'est-à-dire créés par le frottement de l'air sur le véhicule en déplacement, ont pu, au moins en partie, être traités à leur source. C'est-à-dire que pour économiser l'énergie, les formes ont été modifiées, on a amélioré la pénétration dans l'air et diminué les turbulences qui sont elles-mêmes source de bruits. Parmi les parois d'un véhicule qui séparent la source de bruit aérodynamique extérieure de l'espace intérieur où se trouve le passager, les vitrages sont évidemment les plus difficiles à traiter. On ne peut utiliser des absorbants pâteux ou fibreux réservés aux parois opaques et pour des raisons de poids, les épaisseurs ne peuvent être augmentées inconsidérablement. Le brevet européen EP-B1-0 387 148 propose des vitrages qui réalisent une bonne isolation contre les bruits d'origine aérodynamique sans que leur poids et/ou leurs épaisseurs soient trop augmentés. Le brevet propose ainsi un vitrage feuilleté dont l'intercalaire possède de bonnes propriétés d'amortissement.

Cependant les bruits eux-mêmes comme les bruits de moteur, bruits de roulement ou de suspension doivent par la même occasion être traités. Ces bruits ont déjà été traités à leur origine ou, en partie, au cours de leur propagation, soit aérienne (revêtement absorbant en particulier) ou dans les solides (pièces de liaison en élastomère par exemple).

Par contre, le traitement des vitrages contre les bruits qui ont leur origine dans le véhicule lui-même, c'est-à-dire les bruits transmis soit par voie aérienne, soit par l'intermédiaire des solides, est plus difficile à réaliser et n'est pas encore complètement maîtrisé à l'heure actuelle. Les vitrages constituent une surface importante de l'habitacle du véhicule et donc en conséquence, une surface de rayonnement importante. Il s'avère que l'emploi de pièces de liaison adaptées reste insuffisant pour éviter la propagation du bruit par vibration des vitrages et qu'en particulier à certaines vitesses de rotation du moteur, un bourdonnement perceptible par le passager apparaît et cause ainsi une source de désagrément. En effet, la rotation du moteur entraîne une création de vibrations qui se transmettent aux vitrages soit par voie aérienne, soit par voie solidienne.

Les principaux paramètres influençant le comportement vibro-acoustique des vitrages dans ce domaine résident dans la forme du vitrage, dans la structure du vitrage, dans l'interface vitrage/habitacle, dans la source excitatrice, dans le mode de propagation. Ainsi pour un véhicule donné, les paramètres d'action pour améliorer le comportement des panneaux rayonnants que constituent les vitrages résident dans la structure du vitrage ainsi que dans l'interface vitrage/habitacle.

De nombreux efforts ont été réalisés dans la structure du vitrage afin d'améliorer l'effet d'affaiblissement sonore à l'intérieur de l'habitacle. On peut citer de manière générale, la réalisation de vitrages feuilletés dont l'intercalaire possède des propriétés originales conférant aux vitrages une bonne protection contre les bruits aérodynamiques et/ou les bruits d'origine aérienne et/ou les bruits d'origine solidienne ainsi que la réalisation de vitrages multiples. Par contre, l'utilisation de tels vitrages sur l'ensemble d'un véhicule augmente considérablement le coût du véhicule.

L'invention se donne pour tâche de fournir un vitrage fixe en contact avec un joint périphérique pour véhicule et notamment pour véhicule automobile qui présente une bonne protection acoustique vis-à-vis des bruits, en particulier des bruits d'origine aérienne et d'origine solidienne et cela sans pour autant augmenter considérablement le coût du véhicule.

Ce but est atteint selon l'invention par un vitrage fixe en contact avec un joint périphérique pour véhicule et notamment pour véhicule automobile, ledit vitrage étant dépourvu au moins du ou des modes de rayonnement qui sont couplés avec un ou plusieurs modes de cavité de l'habitacle du véhicule lorsque ledit vitrage est excité par un champ acoustique. On entend par champ acoustique l'ensemble des vibrations créées par la propagation aérienne et solidienne des bruits. La structure du vitrage n'est pas limitée aux vitrages monolithiques, tous types de vitrages feuilletés et de vitrages multiples entrent aussi dans le cadre de l'invention, de même la forme du vitrage n'est pas un paramètre limitatif de l'invention, toutes formes possibles pour un vitrage fixe destiné à un véhicule entrent dans le cadre de l'invention.

Le vitrage fixe selon l'invention permet grâce à l'élimination des modes de rayonnement qui sont couplés avec des modes de cavité de l'habitacle du véhicule de diminuer l'effet de bourdonnement perceptible par le passager à certaines vitesses de rotation du moteur. En effet, à certaines fréquences de vibrations du moteur, c'est-à-dire à certaines vitesses de rotation du moteur, les vitrages et l'habitacle du véhicule ont chacun des modes de rayonnement et de cavité dont le couplage amplifie le bourdonnement issu du rayonnement des bruits provenant en l'occurence du moteur par les vitrages. Ainsi, en éliminant ces modes de rayonnement, on élimine l'effet amplifié de bourdonnement et on augmente le confort acoustique du passager.

On connaît d'ailleurs d'après la demande de brevet JP-A-09202269 une méthode pour réduire les bruits transmis au travers d'un vitrage, en particulier pour réduire les bruits à l'intérieur d'un véhicule. Il s'agit justement d'éliminer les modes de rayonnement impairs, ce qui est par exemple réalisé en agissant sur le plancher du véhicule.

Une analyse modale de l'habitacle du véhicule permet de déterminer la fréquence où apparait l'effet de bourdonnement causé par le couplage d'un mode de rayonnement d'un vitrage du véhicule avec un mode de cavité de l'habitacle.

Pour cela, on effectue une montée en régime moteur du véhicule et on relève la courbe des modes de cavité du volume de l'habitacle. La fréquence dite "gênante" apparait alors par la formation d'un pic important avec une précision de l'ordre de ± 5 %. Grâce au vitrage fixe selon l'invention, il est alors possible d'éliminer ce mode de rayonnement dit "gênant".

Selon une variante de l'invention, le vitrage fixe est dépourvu au moins du premier mode impair de rayonnement. Par mode impair, on définit le nombre de zones de rayonnement et vice-versa, par mode pair, on définit le nombre pair de zones de rayonnement. Ainsi par premier mode impair, on définit une unique zone de rayonnement. De cette manière, lorsque ledit vitrage selon l'invention est excité par un champ acoustique, il possède au moins deux zones de rayonnement.

Le vitrage fixe selon l'invention permet grâce à l'élimination du premier mode impair de rayonnement de diminuer le rayonnement dudit vitrage. En effet, le premier mode impair est le mode le plus rayonnant du fait de son unique zone de rayonnement. Ainsi en éliminant ce mode de rayonnement, on diminue le rayonnement global du vitrage par la présence d'au moins deux zones de rayonnement.

Selon une variante préférée de l'invention, le vitrage fixe est dépourvu de la totalité des modes impair de rayonnement lorsque celui-ci est excité par un champ acoustique. De cette manière, lorsque ledit vitrage est excité par un champ acoustique, il possède un nombre pair de zones de rayonnement, c'est à dire des zones de rayonnement en opposition de phase.

Le vitrage fixe selon l'invention permet grâce aux zones de rayonnement en opposition de phase de diminuer le rayonnement global dudit vitrage. En effet, le déphasage des zones permet d'obtenir un effet de compensation de ces zones les unes sur les autres. De façon imagée, lorsqu'une zone tire dans un sens, l'autre zone va pousser en sens inverse, ainsi l'effet vibratoire de la somme de ces zones tend vers un effet nul et le rayonnement actif est fortement diminué. En diminuant le rayonnement, on diminue la transmission des bruits et on améliore en conséquence le confort acoustique à l'intérieur de l'habitacle.

Selon une réalisation préférée du vitrage fixe selon l'invention, le déplacement dudit vitrage dans le joint périphérique est localement diminué. Les inventeurs ont su mettre en évidence qu'en modifiant localement la liaison vitrage fixe/habitacle au niveau du joint périphérique, on réalise une modification du rayonnement du vitrage et en particulier, on peut réaliser une diminution du rayonnement. Ainsi la diminution du déplacement du vitrage dans le joint périphérique uniquement sur une partie limitée de la périphérie du vitrage permet de réaliser un vitrage dépourvu au moins du premier mode impair de rayonnement lorsque celui-ci est excité par un champ acoustique.

Pour chaque type de vitrage bien défini, il est nécessaire de déterminer la ou les zones du vitrage dont le déplacement dans le joint périphérique va être diminué. Pour cela, on effectue une série de mesures selon lesquelles on déplace une ou plusieurs cales le long de la périphérie du vitrage en espaçant entre le joint périphérique et le bord du vitrage, le déplacement étant réglé selon un pas de 5 cm et on relève pour chaque position des cales les modes de rayonnement du vitrage à partir d'une analyse modale. Ainsi, les courbes obtenues permettent de déterminer pour quelles positions des cales, ledit vitrage est dépourvu des modes de rayonnement dits "gênants" lorsque celui-ci est excité par un champ acoustique.

Selon une variante de l'invention, le vitrage fixe possède au moins un point de voilage au niveau de son contact avec le joint périphérique. On entend par point de voilage, une déformation ponctuelle du vitrage. Cette déformation ponctuelle permet d'augmenter localement le maintien du vitrage dans le joint périphérique en écrasant celui-ci, donc en conséquence en diminuant localement sa possibilité de déplacement.

Selon une autre variante de l'invention, le vitrage fixe présente au moins une surépaisseur au niveau de son contact avec le joint périphérique. Cette surépaisseur du vitrage peut être réalisée par tous moyens connus de l'homme du métier, tels que, par exemple à l'aide d'une pastille que l'on vient coller sur le bord du vitrage, ou à l'aide d'un morceau de profilé que l'on positionne sur le bord du vitrage, par exemple, par encapsulation ou par extrusion, ou encore à l'aide d'un encadrement périphérique du vitrage dont l'épaisseur varie sur sa longueur. Tout autre moyen ayant pour but de réaliser une surépaisseur du vitrage au niveau de son contact avec le joint périphérique entre dans le cadre de l'invention. La fonction de cette surépaisseur locale est identique à celle du point de voilage.

Selon une tout autre variante de l'invention, le joint périphérique possède au moins un clip ou crochet venant au contact du vitrage fixe. Par clip ou crochet, on entend tout élément pouvant être intégré dans un joint et exerçant une force de compression sur le vitrage supérieure à celle du joint. Ainsi, grâce à ces éléments, on augmente localement le maintien du vitrage dans le joint périphérique. L'intégration de tels éléments dans le joint périphérique peut être réalisée par tous moyens connus de l'homme du métier.

Selon une autre variante de l'invention, le joint périphérique est contraint sur au moins une partie de sa longueur. On entend par contraindre, le fait de modifier le joint sur au moins une partie de sa longueur de sorte que son contact avec le vitrage soit modifié, ainsi le déplacement du vitrage dans le joint n'est pas identique sur toute la longueur du joint. De préférence, on entend par contraindre le fait d'augmenter localement les forces de pression exercées par le joint périphérique sur le bord du vitrage et ainsi d'augmenter localement le maintien du vitrage dans le joint.

L'invention concerne également un joint périphérique destiné à recevoir un vitrage fixe de protection acoustique amélioré pour véhicule et notamment pour véhicule automobile. Selon l'invention, ce joint périphérique est tel qu'il diminue localement le déplacement du vitrage fixe en contact avec lui. Une diminution locale du déplacement du vitrage fixe dans le joint permet de diminuer le rayonnement dudit vitrage grâce à la suppression au moins du premier mode impair de rayonnement.

Selon une variante de l'invention, le joint périphérique présente une raideur différenciée. De cette manière, le déplacement du vitrage fixe dans le joint n'est pas identique sur toute la longueur de ce joint et le rayonnement du vitrage est modifié.

Selon une autre variante de l'invention, un clip ou crochet est fixé sur le joint périphérique et est en contact avec le vitrage lorsque celui-ci est placé dans le joint. Le clip ou crochet exerce alors une pression sur le vitrage fixe et diminue ainsi de manière ponctuelle le déplacement dudit vitrage.

Le vitrage fixe selon l'invention présente une bonne protection acoustique vis-à-vis des bruits et en particulier des bruits d'origine aérienne et d'origine solidienne. Le vitrage fixe selon l'invention ainsi que le joint périphérique selon l'invention permettent d'améliorer sensiblement l'effet d'affaiblissement sonore du vitrage et donc le confort dans le véhicule, ce qui, c'est bien connu, augmente la capacité de concentration du conducteur et diminue sa fatigue. Ainsi ce vitrage fixe et ce joint périphérique agissent favorablement sur la sécurité en général.

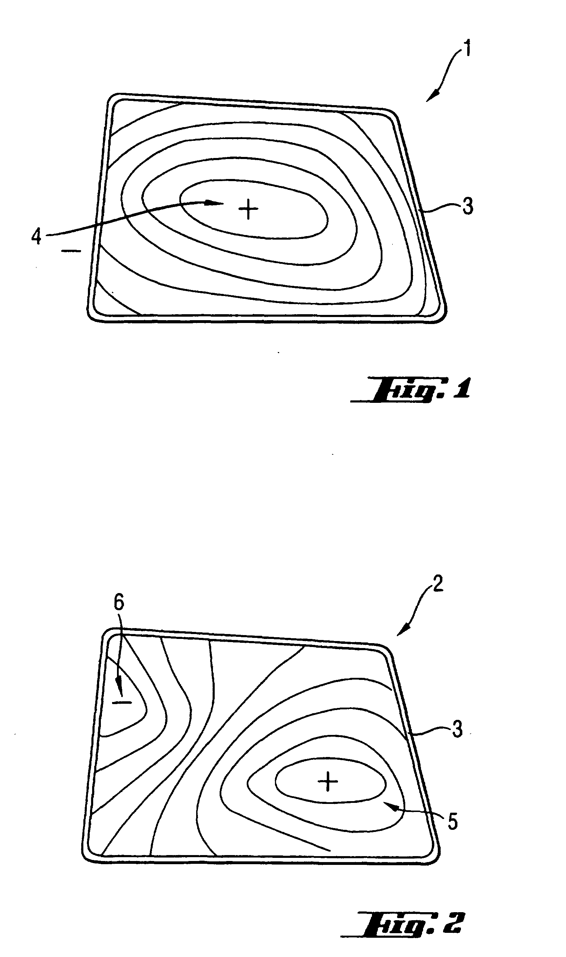

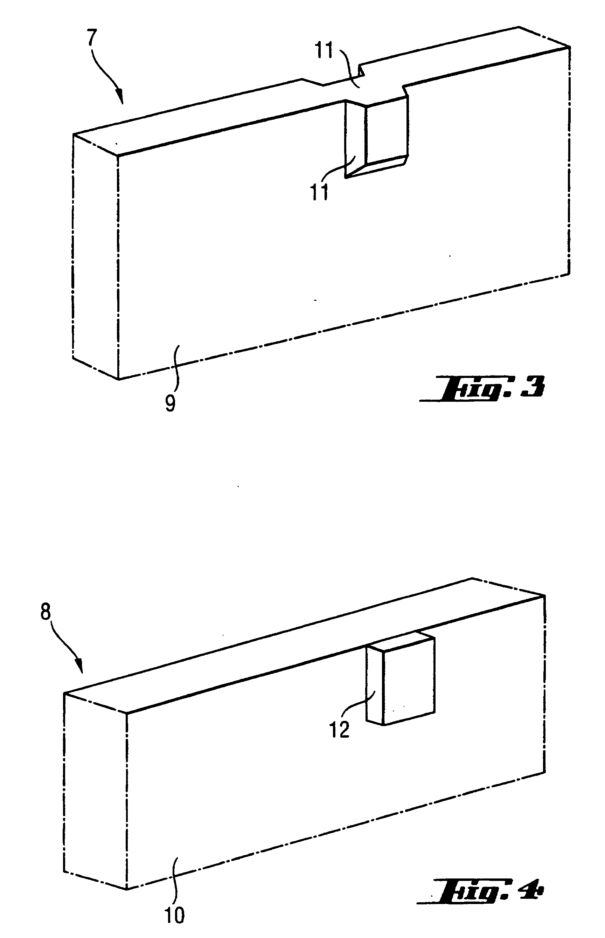

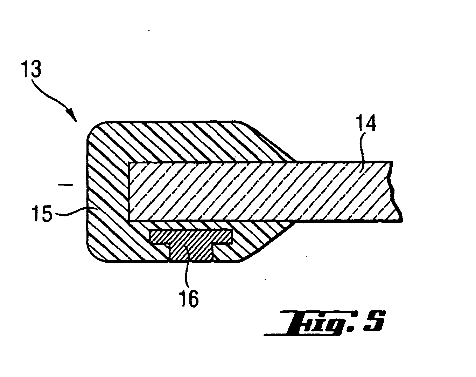

La description et les figures permettent de comprendre le fonctionnement de l'invention et d'en saisir tous les avantages.
Parmi les figures :
. La figure 1 : représente le rayonnement d'une vitre latérale fixe classique de voiture ;
. La figure 2 : représente le rayonnement d'une vitre latérale fixe selon l'invention ;
. La figure 3 : représente le bord d'un vitrage d'une vitre latérale fixe selon l'invention.
. La figure 4 : représente le bord d'un vitrage d'une autre vitre latérale fixe selon l'invention.
. La figure 5 : représente le bord d'un vitrage d'une vitre latérale fixe en contact avec un joint périphérique selon l'invention.

Les figures 1 et 2 représentent respectivement une vitre latérale fixe 1 et 2 de voiture constituées toutes deux, par exemple, d'un vitrage monolithique trempé d'épaisseur 3 mm à base de verre silico-sodo-calcique, en contact avec un joint périphérique 3, cette vitre étant excité par un champ acoustique. Les deux figures permettent de comprendre l'amélioration acoustique apportée par l'invention.

Sur la figure 1, la vitre latérale fixe 1 en contact avec le joint périphérique 3 montre le rayonnement d'une vitre fixe classique. On entend par vitre classique, une vitre que l'on trouve de manière générale sur les véhicules actuels et qui n'est pas conforme à l'invention. La vitre latérale fixe 1 excitée par un champ acoustique présente une seule zone de rayonnement 4. Cette zone 4 est représentée par plusieurs courbes fermées qui s'emboîtent les unes dans les autres. Cette représentation est équivalente à celle de courbes de niveaux, les différents niveaux correspondants ici aux déplacements dus aux vibrations du vitrage. Le signe " + " représente la phase positive du rayonnement et le signe "-" dans la figure suivante représente la phase négative. De cette manière, on représente avec les signes " + " et "-" les zones en opposition de phase.

La figure 1 montre, grâce à la zone de rayonnement 4, que toute la surface du vitrage rayonne en phase, en effet toute la surface se déplace de la même manière. Ainsi le rayonnement actif du vitrage englobe la totalité de la surface du vitrage.

Sur la figure 2, la vitre latérale fixe 2 en contact avec le joint périphérique 3 montre le rayonnement d'une vitre fixe selon l'invention. On observe ici deux zones de rayonnement 5 et 6 en opposition de phase remplaçant la zone de rayonnement 4. Les courbes représentant le déplacement, on comprend donc que lorsque la zone 5 se déplace dans un sens, la zone 6 se déplace dans le sens inverse. Ainsi un effet de compensation apparaît et le rayonnement actif est fortement diminué par rapport à celui de la figure 1. Grâce à cette diminution du rayonnement actif, on diminue la transmission des bruits, et donc on améliore l'effet d'affaiblissement sonore à l'intérieur de l'habitacle du véhicule.

Les représentations des figures 1 et 2 ne sont données qu'à titre explicatif et ne représentent donc aucune valeur de mesures particulières. En effet, les présentations de mesures n'aurait aucun intérêt pour la description car de telles mesures sont particulières à chaque type de véhicule et à chaque vitrage fixe de ces véhicules.

Les figures 3 et 4 représentent le bord (7 ; 8) d'un vitrage monolithique (9 ; 10) d'une vitre latérale fixe 2 selon l'invention, ledit bord (7 ; 8) venant en contact avec un joint périphérique ici non réprésenté.

Selon la représentation de la figure 3, le bord 7 du vitrage 9 présente un point de voilage 11, c'est-à-dire une déformation locale du galbe du vitrage. Un tel point de voilage 11, peut-être obtenu, par exemple, à l'aide d'une forme de pressage lors du formage du vitrage, ou encore à l'aide d'un soufflage différentiel sur cette zone lors du formage ou de la trempe dudit vitrage. Le point de voilage 11 présente, de préférence, une épaisseur de l'ordre du millimètre. De cette manière lorsque le vitrage 9 est en contact avec le joint périphérique, le maintien du vitrage 9 dans le joint périphérique, est localement augmenté grâce au point de voilage 11 qui diminue localement le déplacement du vitrage 9 dans le joint périphérique.

Selon la représentation de la figure 4, le bord 8 du vitrage 10 présente une surépaisseur locale 12. Une telle surépaisseur 12 peut être obtene, par exemple, en collant une pastille de plastique, ou encore en sérigraphiant une pastille d'émail sur ledit vitrage. Ces pastilles 12 présentent, de préférence, les dimensions 5 mm x 10 mm x 1 mm. De cette manière, comme pour le point de voilage 11, le déplacement de vitrage 10 dans le joint périphérique est localement diminué.

La figure 5 représente le bord 13 d'un vitrage monolithique 14 d'une vitre latérale fixe, en contact avec un joint périphérique 15 dont la raideur est ponctuellement modifiée afin de diminuer le déplacement latéral de la vitre latérale fixe en contact avec ce joint périphérique 15. Le joint périphérique 15 est réalisé à partir d'un joint périphérique standard surmoulé que l'on trouve de manière habituelle sur les vitres fixes de véhicules.

Selon la représentation de la figure 5, le joint périphérique 15 présente un insert 16 noyé dans son épaisseur. Un tel insert 16 présente une dureté shore plus importante que celle du joint périphérique 15 et est, par exemple, en métal ou en plastique. Selon la représentation, il est intégré dans le joint 15 de manière affleurante au côté extérieur du joint 15, il peut être également affleurant au bord du vitrage ou complètement noyé dans l'épaisseur du joint 15. La réalisation d'un tel joint 15 comprenant un insert 16 ne présente aucune difficulté pour l'homme du métier : l'insert est, préalablement à l'injection de matière, positionné à l'intérieur du moule ou sur le bord du vitrage de manière à rester en place pendant l'injection de la matière, puis reste noyé dans la matière durcie lors de l'ouverture du moule. Le joint ainsi obtenu permet alors de diminuer le déplacement latéral de la vitre au niveau de l'insert 16.

L'invention telle que revendiquée ne se limite pas ces types de réalisation, elle est applicable à tous types de vitrage fixe en contact avec un joint périphérique et permet de diminuer au moins un ou des modes de rayonnement qui sont couplés avec un ou plusieurs modes de cavité de l'habitacle du véhicule lorsque ledit vitrage est excité par un champ acoustique.

Les avantages présentés par le vitrage selon l'invention sont manifestes: la protection acoustique est sensiblement améliorée sans qu'il soit nécessaire de modifier la structure de toutes les surfaces vitrées du véhicule, donc en conséquence à moindre coût.

## Revendications

1. Habitacle de véhicule, notamment de véhicule automobile, comportant un vitrage fixe (9, 14) de protection acoustique améliorée et un joint périphérique (15) qui assure la liaison vitragelhabitacte du véhicule, **caractérisé en ce qu'**il comporte des moyens modifiant localement la liaison vitragelhabitacle au niveau du joint de manière à diminuer le déplacement du vitrage dans le joint périphérique sur une partie limitée de la périphérie du vitrage.

2. Habitacle de véhicule selon la revendication 1, **caractérisé en ce que** le vitrage (9) possède au moins un point de voilage (11) au niveau de son contact avec le joint périphérique.

3. Habitacle de véhicule selon la revendication 1, **caractérisé en ce que** le vitrage (9) présente au moins une surépaisseur (12) au niveau de son contact avec le joint périphérique.

4. Habitacle de véhicule selon la revendication 1, **caractérisé en ce que** le joint périphérique possède au moins un clip ou crochet venant au contact du vitrage.

5. Habitacle de véhicule selon la revendication 1, **caractérisé en ce que** le joint périphérique (15) est modifié sur au moins une partie de sa longueur de façon à augmenter localement les forces de pression exercées par le joint périphérique sur le bord (13) du vitrage.

6. Méthode de protection acoustique dans un habitacle de véhicule, notamment de véhicule automobile, comportant un vitrage fixe (9, 14) de protection acoustique améliorée et un joint périphérique (15) qui assure la liaison vitragelhabitacle du véhicule, **caractérisée en ce qu'**elle consiste à modifier localement la liaison vitrage/habitacle au niveau du joint de manière à diminuer le déplacement du vitrage dans le joint périphérique sur une partie limitée de la périphérie du vitrage.

7. Méthode selon la revendication 6, **caractérisée en ce qu'**on déforme localement le galbe du vitrage de sorte que le vitrage (9) présente un point de voilage (11) en son bord (7).

8. Méthode selon la revendication 6, **caractérisée en ce qu'**on réalise une surépaisseur (12) sur le vitrage au niveau de son contact avec le joint périphérique.

9. Méthode selon la revendication 6, **caractérisée en ce qu'**on fixe un clip ou un crochet sur le joint périphérique, en contact avec le vitrage lorsque celui-ci est placé dans le joint.

10. Méthode selon la revendication 6, **caractérisée en ce qu'**on intègre un élément dans le joint périphérique (13) de manière à exercer une force de compression sur le vitrage (14) supérieure à celle du joint.

## Patentansprüche

1. Fahrzeugzelle, insbesondere eines Kraftfahrzeugs, die eine feststehende Verglasung (9, 14) mit verbesserter Schalldämmung und eine Umfangsdichtung (15), welche die Verbindung Verglasung/Fahrzeugzelle sicherstellt, umfasst, **dadurch gekennzeichnet, dass** sie Mittel umfasst, welche die Verbindung Verglasung/Fahrzeugzelle an der Dichtung derart lokal modifizieren, dass die Beweglichkeit der Verglasung in der Umfangsdichtung in einem begrenzten Teil des Umfangs der Verglasung verringert wird.

2. Fahrzeugzelle nach Anspruch 1, **dadurch gekennzeichnet, dass** die Verglasung (9) bei ihrem Kontakt mit der Umfangsdichtung mindestens eine lokale Verformung (11) besitzt.

3. Fahrzeugzelle nach Anspruch 1, **dadurch gekennzeichnet, dass** die Verglasung (9) bei ihrem Kontakt mit der Umfangsdichtung mindestens eine Überdicke (12) aufweist,

4. Fahrzeugzelle nach Anspruch 1, **dadurch gekennzeichnet, dass** die Umfangsdichtung mindestens eine Klemme oder Klammer besitzt, die mit der Verglasung in Berührung kommt.

5. Fahrzeugzelle nach Anspruch 1, **dadurch gekennzeichnet, dass** die Umfangsdichtung (15) in wenigstens einem Teil ihrer Länge derart modifiziert ist, dass die Druckkräfte, die von der Umfangsdichtung auf den Rand (13) der Verglasung ausgeübt werden, lokal erhöht werden.

6. Verfahren zur Schalldämmung einer Fahrzeugzelle, insbesondere eines Kraftfahrzeugs, die eine feststehende Verglasung (9, 14) mit verbesserter Schalldämmung und eine Umfangsdichtung (15), welche die Verbindung Verglasung/Fahrzeugzelle sicherstellt, umfasst, **dadurch gekennzeichnet, dass** sie Mittel umfasst, welche die Verbindung Verglasung/Fahrzeugzelle an der Dichtung derart lokal modifizieren, dass die Beweglichkeit der Verglasung in der Umfangsdichtung in einem begrenzten Teil des Umfangs der Verglasung verringert wird.

7. Verfahren nach Anspruch 6, **dadurch gekennzeichnet, dass** die Krümmung der Verglasung derart lokal verformt wird, dass die Verglasung (9) in ihrem Rand (7) eine lokale Verformung (11) aufweist.

8. Verfahren nach Anspruch 6, **dadurch gekennzeichnet, dass** in der Verglasung an der Stelle ihres Kontakts mit der Umfangsdichtung eine Überdicke (12) erzeugt wird.

9. Verfahren nach Anspruch 6, **dadurch gekennzeichnet, dass** an der Umfangsdichtung im Kontakt mit der Verglasung, wenn sich diese in der Dichtung befindet, eine Klemme oder Klammer befestigt wird.

10. Verfahren nach Anspruch 6, **dadurch gekennzeichnet, dass** in die Umfangsdichtung (13) derart ein Element integriert wird, dass es auf die Verglasung (14) eine Druckkraft ausübt, die stärker als diejenige der Dichtung ist.

## Claims

1. Vehicle compartment, especially of an automotive vehicle, comprising a fixed glazing (9, 14) for improved acoustic protection and a peripheral seal (15) securing the glazing/compartment bond of the vehicle, **characterized in that** it comprises means which locally modify the glazing/compartment bond at the level of the seal in such a way as to reduce the displacement of the glazing in the peripheral seal over a limited part of the periphery of the glazing.

2. Vehicle compartment according to Claim 1, **characterized in that** the glazing (9) possesses at least one distortion point (11) at the level of its contact with the peripheral seal.

3. Vehicle compartment according to Claim 1, **characterized in that** the glazing (9) has at least one overthickness (12) at the level of its contact with the peripheral seal.

4. Vehicle compartment according to Claim 1, **characterized in that** the peripheral seal possesses at least one clip or hook coming into contact with the glazing.

5. Vehicle compartment according to Claim 1, **characterized in that** the peripheral seal (15) is modified over at least a part of its length such as to locally increase the pressure forces exerted by the peripheral seal upon the edge (13) of the glazing.

6. Method of acoustic protection in a vehicle compartment, especially of an automotive vehicle, comprising a fixed glazing (9, 14) for improved acoustic protection and a peripheral seal (15) securing the glazing/compartment bond of the vehicle, **characterized in that** it consists in locally modifying the glazing/compartment bond at the level of the seal in such a way as to reduce the displacement of the glazing in the peripheral seal over a limited part of the periphery of the glazing.

7. Method according to Claim 6, **characterized in that** the principal curvature of the glazing is locally deformed such that the glazing (9) has a distortion point (11) in its edge (7).

8. Method according to Claim 6, **characterized in that** an overthickness (12) is realized on the glazing at the level of its contact with the peripheral seal.

9. Method according to Claim 6, **characterized in that** a clip or a hook is fixed on the peripheral seal, in contact with the glazing when this is placed in the seal.

10. Method according to Claim 6, **characterized in that** an element is integrated into the peripheral seal (13) in such a way as to exert upon the glazing (14) a compressive force greater than that of the seal.
